# EUROPEAN PATENT APPLICATION

(11) **EP 4 797 851 A1**
(43) Date of publication of application: **26.08.2026**
(21) Application number: 24884535.6
(22) Date of filing: 23.10.2024
(51) Int. Cl.: H04W 72/40

(54) **COMMUNICATION METHOD AND COMMUNICATION APPARATUS**

(30) Priority: 02.11.2023 CN 202311452415
(71) Applicant: HUAWEI TECHNOLOGIES CO., LTD., Shenzhen, Guangdong 518129 (CN)
(72) Inventor: LI, Jie, Shenzhen, Guangdong 518129 (CN); PENG, Wenjie, Shenzhen, Guangdong 518129 (CN)
(74) Representative: Goddar, Heinz J.
(86) International application number: PCT/CN2024/126650
(87) International publication number: WO 2025/092531

(57) **Abstract**

This application provides a communication method and a communication apparatus. Considering that when a QoS parameter is not a parameter defined in a standard, a terminal device cannot distinguish between service types of data according to standard protocols, this application proposes that the terminal device may internally obtain first indication information, where the indication information indicates a service type corresponding to data; and send the first indication information to a network device, to indicate, via the indication information, the network device to allocate resources of the service type. Therefore, the terminal device may send service data of the corresponding service type on the resources configured by the network device, so that the resources configured by the network device can be correctly used, thereby avoiding transmission errors and ensuring user service experience.

## Description

This application claims priority to Chinese Patent Application No. 202311452415.8, filed with the China National Intellectual Property Administration on November 2, 2023, and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

As a new type of aircraft, uncrewed aerial vehicles (uncrewed aerial vehicle, UAV) has become increasingly popular nowadays due to their flexibility and convenience. A cellular network can provide uncrewed aerial vehicles with important features such as extensive coverage, high reliability, high security, and continuous mobility and can also enable regulators to supervise UAVs. A communication environment of the UAVs is greatly different from that of common user equipment (user equipment, UE). The UAVs mainly fly above base stations, connects to the base stations through a Uu interface, and mainly perform line of sight (line of sight, LOS) communication. As a result, the UAVs can receive signals from more base stations.

When a UAV is flying in the air, there may be a risk of collision. To avoid collisions between UAVs, a current 3rd generation partnership project (3rd generation partnership project, 3GPP) system supports a mechanism for detect and avoid (detect and avoid mechanism, DAA). In addition, regulators require the UAVs to broadcast their identifiers (identifier, ID) during flight to facilitate continuous management for the UAVs, and the 3GPP system supports broadcast uncrewed aerial vehicle ID (broadcast UAV ID, BRID). This may also be understood as that services currently supported by the UAVs include a BRID service, a DAA service, and a command and control (command and control, C2) service (C2 refers to communication between a UAV and a controller). Currently, 3GPP defines a standardized PC5 interface 5G quality of service identifier (PC5 5G QoS identification, PC5 PQI) (referred to as "PQI" for short below) to indicate different services supported by an uncrewed aerial vehicle.

A current standard has stipulated that base stations may configure a dedicated resource pool for UAVs, and the dedicated resource pool may support the UAVs in transmitting DAA data and/or BRID data. However, for a UAV, when data arrives, if a non-standard PQI is used or no PQI is used, the UAV cannot distinguish, according to a standard protocol, a specific service for which the arrived data is used. Consequently, the UAV may not transmit data of the corresponding service type in the resource pool configured by the base station, which may lead to transmission errors and affecting user service experience.

### SUMMARY

This application provides a communication method. A terminal device may distinguish between data of different service types based on indication information, and indicate, via the indication information, a network device to allocate resources of the service types. Therefore, subsequently, the terminal device may send data of a corresponding service type on a corresponding resource configured by the network device. This can avoid transmission errors caused by the terminal device and ensure user service experience.

According to a first aspect, a communication method is provided. The method is applied to sidelink communication. The method may be performed by a terminal device, or may be performed by a component (for example, a chip or a circuit) of the terminal device. This is not limited. For example, the terminal device may be an uncrewed aerial vehicle, an aerial vehicle, or the like.

The method includes: The terminal device obtains a first quality of service QoS parameter and indication information, where the indication information indicates a service type corresponding to first data, and the first QoS parameter is a QoS requirement parameter of the first data of the terminal device; and the terminal device sends first information to a network device, where the first information includes the indication information.

In a possible implementation, the first QoS parameter is a QoS parameter not defined by the 3rd generation partnership project 3GPP.

In this application, "the first QoS parameter is a QoS parameter not defined in 3GPP" may also be understood as "the first QoS parameter is a QoS parameter corresponding to a service type not specified in 3GPP specifications".

In a possible implementation scenario, a "parameter not defined by 3GPP" may be understood as a private parameter, not a parameter specified in protocols. For example, assuming that a QoS parameter is a PQI, it is defined in the protocols that PQI values ranging from 40 to 44 and 62 to 65 respectively have corresponding service types. The "first QoS parameter" in this application may be understood as that a PQI value is 10 or a PQI value is 100. In this case, the protocol does not specify a service type corresponding to the PQI value of 10 and a service type corresponding to the PQI value of 100.

In another possible implementation scenario, a "parameter not defined by 3GPP" may be understood as that although a parameter defined by 3GPP is used, a corresponding service type is not defined in protocols. For example, assuming that a QoS parameter is a PQI, the protocols define a service type corresponding to a PQI value of 42 as a C2 service, a service type corresponding to a PQI value of 62 as a BRID service, and a service type corresponding to a PQI value of 64 as a DAA service. The "first QoS parameter" in this application may be understood as follows: When a PQI value is 42, the terminal device internally defines a corresponding service type as a DAA service; when a PQI value is 62, the terminal device internally defines a corresponding service type as a C2 service; and when a PQI value is 64, the terminal device internally defines a corresponding service type as a BRID service.

Optionally, the terminal device may determine whether a QoS parameter is the first QoS parameter or a second QoS parameter. The second QoS parameter may be understood as a "QoS parameter defined by 3GPP", or may be understood as a "QoS parameter corresponding to a service type specified in the 3GPP specifications". Specifically, how the terminal device internally determines whether a QoS parameter is a parameter specified in a protocol or not may be internally implemented by the terminal device. This is not limited.

It should be noted that, in this application, a specific name of the QoS parameter is not limited. For example, the QoS parameter may be a PQI or another parameter, and the parameter falls within the protection scope of this application provided that the parameter is a parameter representing a QoS requirement.

In this application, for example, the "service type" includes at least one of a detect and avoid DAA service, a broadcast uncrewed aerial vehicle ID BRID service, and a command and control C2 service. For example, the service type corresponding to the first data may include a DAA service type and a BRID service type.

For example, the first QoS parameter may be obtained by the terminal device from a core network by using a non-access stratum (non-access stratum, NAS) message.

Optionally, in this application, the terminal device may distinguish between service types corresponding to data by using the obtained indication information. Therefore, if the network device has preconfigured resources of different service types for the terminal device, the terminal device may directly transmit data of a corresponding service type on a corresponding resource, thereby avoiding a transmission error.

Based on the foregoing technical solution, in this application, considering that when a QoS parameter is not a parameter defined in a standard, the terminal device cannot distinguish between service types of data by using a standard protocol, this application proposes that the terminal device may internally determine first indication information, where the indication information indicates a service type corresponding to data. The terminal device may further send the first indication information to the network device, to indicate the network device to allocate a resource of the service type. Therefore, the terminal device may send service data of a corresponding service type on a resource configured by the network device, so that the resource configured by the network device can be correctly used, thereby avoiding a transmission error. For example, the terminal device may transmit data of a DAA service on a DAA dedicated resource configured by the network device, the terminal device may transmit data of a BRID service on a BRID dedicated resource configured by the network device, and the terminal device may transmit data of a common service on a common resource configured by the network device.

In a possible implementation, the indication information is used by the network device to allocate a resource corresponding to the service type to the terminal device.

Based on the foregoing technical solution, in this application, the network device may configure the resource of the corresponding service type for the terminal device based on the indication information, and the terminal device may transmit data of the corresponding service type on the resource configured by the network device. This avoids transmission errors and ensures user service experience.

In a possible implementation, the indication information is obtained from an upper layer of the terminal device, and is sent by the upper layer of the terminal device to a lower layer; or the indication information is obtained by the terminal device based on the first data. For example, the upper layer of the terminal device determines the indication information based on the first QoS parameter. For another example, the upper layer of the terminal device determines the indication information based on the first data.

In this application, the "upper layer of the terminal device" may be understood as, for example, an A2X layer, or may be understood as an application layer; and the "lower layer of the terminal device" may be understood as, for example, a physical layer or an access layer.

In a possible implementation, the indication information indicates a service type corresponding to a quality of service QoS flow.

In a possible implementation, the first information further includes a layer 2 identifier L2 ID, and the indication information indicates a service type of data of the terminal device corresponding to the L2 ID.

In this application, the L2 ID is an L2 identifier of a destination (destination), and the L2 ID may indicate a terminal device.

In a possible implementation, the indication information indicates a service type corresponding to a QoS flow associated with the L2 ID.

In a possible implementation, the QoS flow corresponds to a same service type.

In a possible implementation, the method further includes: determining a first resource allocated by the network device, where the first resource is used to transmit data of a first service type; and sending a first transport block to the network device on the first resource, where data in the first transport block corresponds to a same service type, the service type corresponding to the data in the first transport block is the first service type, and the data in the first transport block is a part or all of the first data.

Based on the foregoing technical solution, in this application, only data of a same service type can be grouped into a same transport block, to ensure that no data of other service types is transmitted on a dedicated resource allocated by the network device to the terminal device, thereby avoiding a transmission error.

According to a second aspect, a communication method is provided. The method is applied to sidelink communication. The method may be performed by a network device, or may be performed by a component (for example, a chip or a circuit) of the network device. This is not limited. For example, the network device may be a base station.

It should be noted that same beneficial effects achieved by the methods in the second aspect and the first aspect are not repeatedly described, and may be understood with reference to the beneficial effects in the first aspect.

The method includes: The network device receives first information from a terminal device, where the first information includes indication information, and the indication information indicates a service type corresponding to first data; and the network device allocates a resource corresponding to the service type to the terminal device based on the first indication information.

For example, the network device may indicate allocated resources of different service types to the terminal device in a manner of configuration information.

In a possible implementation, the first information further includes a first QoS parameter, the first QoS parameter is a QoS requirement parameter of the first data of the terminal device, and the first QoS parameter is a QoS parameter not defined by the 3rd generation partnership project 3GPP.

In a possible implementation, the indication information is provided by an upper layer of the terminal device, or the indication information is obtained by the terminal device based on the first data.

In a possible implementation, the service type includes at least one of a detect and avoid DAA service, a broadcast uncrewed aerial vehicle ID BRID service, and a command and control C2 service.

In a possible implementation, the indication information indicates a service type corresponding to a quality of service QoS flow.

In a possible implementation, the first information further includes a layer 2 identifier L2 ID, and the indication information indicates a service type of data of the terminal device corresponding to the L2 ID.

In a possible implementation, the indication information indicates a service type corresponding to a QoS flow associated with the L2 ID.

In a possible implementation, the QoS flow corresponds to a same service type.

In a possible implementation, the method further includes: The network device receives a first transport block from the terminal device, where data in the first transport block corresponds to a same service type, the service type corresponding to the data in the first transport block is a first service type, the data in the first transport block is a part or all of the first data, the first transport block is located on a first resource, and the first resource is used to transmit data of the first service type.

According to a third aspect, a communication method is provided. The method is applied to sidelink communication. The method may be performed by a terminal device, or may be performed by a component (for example, a chip or a circuit) of the terminal device. This is not limited. For example, the terminal device may be an uncrewed aerial vehicle, an aerial vehicle, or the like.

The method includes: The terminal device obtains a second quality of service QoS parameter, where the second QoS parameter indicates a service type corresponding to second data, the second QoS parameter is a QoS requirement parameter of the second data of the terminal device, and the second QoS parameter is a service QoS parameter defined in 3rd generation partnership project 3GPP; and the terminal device sends second information to a network device, where the second information includes the second QoS parameter.

For example, the second QoS parameter may be obtained by the terminal device from a core network by using a non-access stratum (non-access stratum, NAS) message.

For example, the "service type" in this application may include at least one of a detect and avoid DAA service, a broadcast uncrewed aerial vehicle ID BRID service, and a command and control C2 service.

Based on the foregoing technical solution, in this application, when a QoS parameter is a parameter defined in a standard, the terminal device may distinguish between service types of data by using a standard QoS parameter, and the terminal device may further send the QoS parameter to the network device. The terminal device may send data of a corresponding service type on a resource configured by the network device, so that the resource configured by the network device can be correctly used, thereby avoiding a transmission error. For example, the terminal device may transmit data of a DAA service on a DAA dedicated resource configured by the network device, the terminal device may transmit data of a BRID service on a BRID dedicated resource configured by the network device, and the terminal device may transmit data of a common service on a common resource configured by the network device.

In a possible implementation, the second QoS parameter is used by the network device to allocate a resource corresponding to the service type to the terminal device.

In a possible implementation, the second QoS parameter indicates a service type corresponding to a quality of service QoS flow.

In a possible implementation, the second information further includes a layer 2 identifier L2 ID, and the second QoS parameter indicates a service type corresponding to the L2 ID.

In a possible implementation, the second QoS parameter indicates a service type corresponding to a QoS flow associated with the L2 ID.

In a possible implementation, the QoS flow corresponds to a same service type.

In a possible implementation, the method further includes: determining a second resource allocated by the network device, where the second resource is used to transmit data of a second service type; and sending a second transport block to the network device on the second resource, where data in the second transport block corresponds to a same service type, the service type corresponding to the data in the second transport block is the second service type, and the data in the second transport block is a part or all of the second data.

Based on the foregoing technical solution, in this application, only data of a same service type can be grouped into a same transport block, to ensure that no data of other service types is transmitted on a dedicated resource allocated by the network device to the terminal device, thereby avoiding a transmission error.

According to a fourth aspect, a communication method is provided. The method is applied to sidelink communication. The method may be performed by a network device, or may be performed by a component (for example, a chip or a circuit) of the network device. This is not limited. For example, the network device may be a base station.

It should be noted that same beneficial effects achieved by the methods in the fourth aspect and the third aspect are not repeatedly described, and may be understood with reference to the beneficial effects in the first aspect.

The method includes: The network device receives second information from a terminal device, where the second information includes a second quality of service QoS parameter, the second QoS parameter indicates a service type corresponding to second data, the second QoS parameter is a QoS requirement parameter of the second data of the terminal device, and the second QoS parameter is a service QoS parameter defined in 3rd generation partnership project 3GPP; and the network device allocates a resource corresponding to the service type to the terminal device based on the second QoS parameter.

In a possible implementation, the second QoS parameter is provided by an upper layer of the terminal device.

In a possible implementation, the service type includes at least one of a detect and avoid DAA service, a broadcast uncrewed aerial vehicle ID BRID service, and a command and control C2 service.

In a possible implementation, the second QoS parameter indicates a service type corresponding to a QoS flow.

In a possible implementation, the second information further includes a layer 2 identifier L2 ID, and the second QoS parameter indicates a service type corresponding to the L2 ID.

In a possible implementation, the second QoS parameter indicates a service type corresponding to a QoS flow associated with the L2 ID.

In a possible implementation, the QoS flow corresponds to a same service type.

In a possible implementation, the method further includes: The network device receives a second transport block from the terminal device, where data in the second transport block corresponds to a same service type, the service type corresponding to the data in the second transport block is a second service type, the data in the second transport block is a part or all of the second data, the second transport block is located on a second resource, and the second resource is used to transmit data of the second service type.

According to a fifth aspect, a communication apparatus is provided. The device is configured to perform the method according to any one of the possible implementations of the first aspect or the third aspect. Specifically, the device may include a unit and/or a module, for example, a transceiver unit and/or a processing unit, configured to perform the method according to any one of the possible implementations of the first aspect or the third aspect.

In an implementation, the apparatus is a first node. When the apparatus is a communication apparatus, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first node. When the apparatus is a chip, a chip system, or a circuit used in a communication apparatus, a communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The device is configured to perform the method according to any one of the possible implementations of the second aspect or the fourth aspect. Specifically, the device may include a unit and/or a module, for example, a transceiver unit and/or a processing unit, configured to perform the method according to any one of the possible implementations of the second aspect or the fourth aspect.

In an implementation, the apparatus is a second node. When the apparatus is a communication apparatus, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a second node. When the apparatus is a chip, a chip system, or a circuit used in a communication apparatus, a communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a seventh aspect, a communication apparatus is provided. The apparatus includes at least one processor, configured to execute a computer program or instructions stored in a memory, to perform the method according to any one of the possible implementations of the first aspect or the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a first node.

In another implementation, the apparatus is a chip, a chip system, or a circuit used in a first node.

According to an eighth aspect, a communication apparatus is provided. The apparatus includes at least one processor, configured to execute a computer program or instructions stored in a memory, to perform the method according to any one of the possible implementations of the second aspect or the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a second node.

In another implementation, the apparatus is a chip, a chip system, or a circuit used in a second node.

According to a ninth aspect, this application provides a processor, including an input circuit, an output circuit, and a processing circuit. The processing circuit is configured to: receive a signal through the input circuit, and transmit a signal through the output circuit, so that the processor performs the method according to any one of the possible implementations of any one of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal that is received by the input circuit may be received and input by, for example, but not limited to, a transceiver, and a signal that is output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a tenth aspect, a processing device is provided, including a processor and a memory. The processor is configured to: read instructions stored in the memory, receive a signal through a transceiver, and transmit a signal through a transmitter, to perform the method according to any one of the possible implementations of any one of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner in which the memory and the processor are disposed are not limited in this embodiment of this application.

It should be understood that a related data exchange process such as sending of indication information may be a process of outputting the indication information from the processor, and receiving of capability information may be a process of receiving the input capability information by the processor. Specifically, data that is output by the processor may be output to the transmitter, and input data that is received by the processor may be from the transceiver. The transmitter and the transceiver may be collectively referred to as a transceiver.

The processing device in the ninth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eleventh aspect, a computer-readable storage medium is provided. The computer-readable storage medium stores program code to be executed by a device, and the program code is used to perform the method according to any one of the possible implementations of the first aspect to the fourth aspect.

According to a twelfth aspect, a computer program product including instructions is provided. When the computer program product runs on a computer, the computer is enabled to perform the method according to any one of the possible implementations of the first aspect to the fourth aspect.

According to a thirteenth aspect, a chip system is provided, including a processor configured to invoke a computer program from a memory and run the computer program, so that a device in which the chip system is installed performs the method according to the possible implementations of the first aspect to the fourth aspect.

According to a fourteenth aspect, a communication system is provided. The communication system includes a terminal device and a network device. The terminal device is configured to perform the method according to any one of the possible implementations of the first aspect or the third aspect, and the network device is configured to perform the method according to any one of the possible implementations of the second aspect or the fourth aspect.

### BRIEF DESCRIPTION OF DRAWINGS

FIG. 1 is a diagram of a scenario to which this application is applicable;
FIG. 2 is a diagram of another scenario to which this application is applicable;
FIG. 3 is a diagram of still another scenario to which this application is applicable;
FIG. 4 is a schematic flowchart of a communication method 400 according to this application;
FIG. 5 is a schematic flowchart of a communication method 500 according to this application;
FIG. 6 is a block diagram of a communication apparatus 600 according to this application; and
FIG. 7 is a block diagram of a communication apparatus 700 according to this application.

### DESCRIPTION OF EMBODIMENTS

The following describes technical solutions of this application with reference to accompanying drawings.

Technologies provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a satellite communication system, a future communication system, for example, a 6th generation (6th generation, 6G) mobile communication system, or a converged system of a plurality of systems. The 5G communication system may also be referred to as a new radio (new radio, NR) system, a satellite communication system, a future communication system, for example, a 6th generation (6th generation, 6G) mobile communication system, or a converged system of a plurality of systems.

The network device may be an entity configured to send or receive a signal on a network side. The network device may be an access device via which the communication apparatus accesses the wireless communication system in a wireless manner. For example, the network device may be a base station. The base station may cover various names in the following in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmission point (transmission point, TP), a master eNodeB MeNB, a secondary eNodeB SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, an analogue, or a combination thereof. Alternatively, the network device may be a communication module, a modem, or a chip disposed in the foregoing device or apparatus. Alternatively, the network device may be a mobile switching center, a device that takes on a base station function in device-to-device (Device-to-Device, D2D) communication, vehicle-to-everything (vehicle-to-everything, V2X) communication, and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

In a network structure, the network device may alternatively be a central unit (central unit, CU) or a distributed unit (distributed unit, DU), or the network device may include a CU and a DU. The CU and the DU may be understood as division of the base station from the perspective of logical functions. The CU and the DU may be physically separated, or may be deployed together. This is not specifically limited in embodiments of this application. One CU may be connected to one DU, or a plurality of DUs may share one CU. This can reduce costs and facilitate network expansion. The CU and the DU may be divided based on a protocol stack. In a possible manner, a radio resource control (Radio Resource Control, RRC) layer, a service data adaptation protocol (Service Data Adaptation Protocol, SDAP) stack, and a packet data convergence protocol (Packet Data Convergence Protocol, PDCP) layer are deployed on the CU, and a radio link control (Radio Link Control, RLC) layer, a media access control (Media Access Control, MAC) layer, and a physical layer are deployed on the DU. The foregoing protocol stack segmentation manner is not completely limited in this application, and there may be another segmentation manner. For details, refer to the technical report (technical report, TR) 38.801 v14.0.0.

A terminal device in this application may include an uncrewed aerial vehicle or an aircraft. For example, the "aircraft" may include a spacecraft, a glider, a hot air balloon, or a jet backpack.

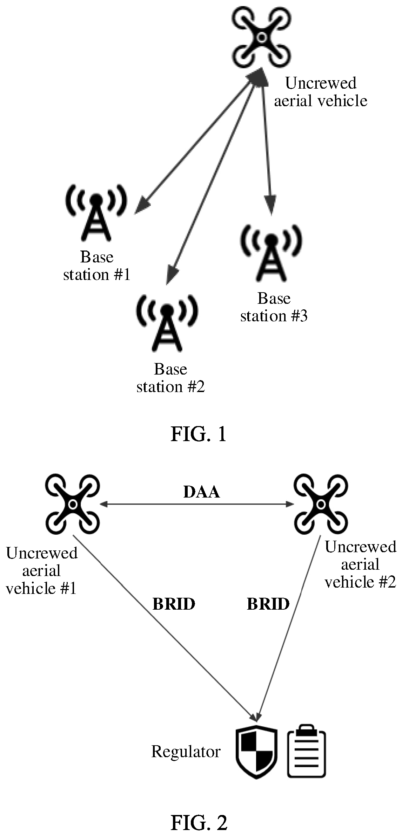

As a new type of aircraft, an uncrewed aerial vehicle (uncrewed aerial vehicle, UAV) is flexible and convenient and therefore is increasingly popular nowadays. A cellular network can provide the uncrewed aerial vehicle with important features such as extensive coverage, high reliability, high security, and continuous mobility and provide a regulator with a regulatory capability. A communication environment of the uncrewed aerial vehicle is greatly different from that of common user equipment (user equipment, UE). The uncrewed aerial vehicle mainly flies above a base station, connects to the base station through a Uu interface, and mainly performs line of sight (line of sight, LOS) communication. Therefore, the uncrewed aerial vehicle can receive signals from more base stations. As shown in FIG. 1, the uncrewed aerial vehicle may simultaneously communicate with a base station #1, a base station #2, and a base station #3.

The uncrewed aerial vehicle may collide when flying in the air. To avoid collisions of the uncrewed aerial vehicle, a current 3rd generation partnership project (3rd generation partnership project, 3GPP) system supports a detect and avoid (detect and avoid mechanism, DAA) mechanism, including network-assisted DAA and PC5-based DAA. Specifically, for the network-assisted DAA, an unmanned aircraft system traffic management (unmanned aircraft system traffic management, UTM) obtains a flight path of each uncrewed aerial vehicle during a flight authorization process of the uncrewed aerial vehicle or during reporting at an application layer. In some cases, flight paths of different uncrewed aerial vehicles overlap or are in a same area. The UTM may request a 5G system (5G system, 5GS) to perform DAA between any two uncrewed aerial vehicles whose flight paths may overlap or be in a same area. A network determines a collision risk of the uncrewed aerial vehicles based on the flight paths reported by the uncrewed aerial vehicles. If there is a collision risk, the network delivers an instruction to UE to avoid the collision. The network-assisted DAA is very useful for scenarios in which regulations may deem sidelink (sidelink) transmission unresolved or PC5 connectivity of an uncrewed aerial vehicle unavailable. In the PC5-based DAA, an uncrewed aerial vehicle directly broadcasts a DAA message (for example, position information) through a PC5 interface, a peer uncrewed aerial vehicle determines a collision risk after receiving the DAA message, and sends a collision resolution message to peer UE if there is a collision risk, and the peer UE replies with a collision resolution response message. In addition, a regulator requires the uncrewed aerial vehicle to broadcast an uncrewed aerial vehicle ID during flight to facilitate continuous management of the uncrewed aerial vehicle, and the 3GPP system supports broadcast uncrewed aerial vehicle ID (broadcast UAV ID, BRID), including multicast broadcast service (multicast broadcast service, MBS)-based BRID and PC5-based BRID. The MBS-based BRID is broadcasting an uncrewed aerial vehicle ID by using an existing MBS. The PC5-based BRID is similar to DAA, and an uncrewed aerial vehicle performs broadcasting through a PC5 interface. FIG. 2 shows the DAA scenario and the BRID scenario described above. For example, a DAA service may be performed between an uncrewed aerial vehicle #1 and an uncrewed aerial vehicle #2, and a BRID service may be performed between the uncrewed aerial vehicle #1 and a regulator.

A Uu interface performs resource allocation at a granularity of a resource block (resource block, RB), and a sidelink performs channel resource allocation at a granularity of a "resource pool". In an existing new radio (new radio, NR) sidelink system, a maximum of eight resource pools can be configured for common sidelink communication. Herein, "common sidelink communication" is sidelink communication other than sidelink relay discovery (discovery). For sidelink relay discovery, a dedicated resource pool is defined in a protocol, that is, the resource pool can be used only to send a sidelink relay discovery message.

In sidelink, there are two modes for obtaining resources: a base station scheduling mode (mode1) and a user equipment (user equipment, UE) selection mode (mode2). In the base station scheduling mode (mode1), a base station may indicate, by including a resource pool (resource pool, RP) index (index) in downlink control information (downlink control information, DCI), a resource pool to which a currently scheduled resource belongs. Upon receptions of the scheduled sidelink resource, UE first determines a destination (destination) to which data is to be sent, and then determines to-be-sent logical channel data of the destination, where "destination" may be a unicast, multicast, or broadcast destination. Simply speaking, a destination with highest-priority to-be-transmitted data is selected from all destinations, then buffered data and media access control control elements (media access control control element, MAC CE) in logical channels are sorted in the destination, so that highest-priority data or a MAC CE is preferentially sent.

3GPP defines an aerial to everything (aerial to everything, A2X) layer for an uncrewed aerial vehicle service. A2X performs communication based on a PC5 interface and performs transmission over sidelink. A2X includes BRID, DAA, and command and control (Command and control, C2) communication (C2 refers to communication between an uncrewed aerial vehicle and a controller). In existing standards, an additional resource pool, namely, an A2X resource pool, is introduced for uncrewed aerial vehicles. For example, data of the DAA service is transmitted on a DAA dedicated resource, and the BRID service is transmitted on a BRID dedicated resource pool. Specifically, when broadcasting an SIB message, the base station may include additional indication information in the A2X resource pool, to indicate that the resource is used for the DAA service and/or the BRID service. Currently, 3GPP defines standard PC5 interface 5G quality of service indication information (PC5 5G QoS identification, PC5 PQI) (referred to as "PQI" for short below) to indicate different services supported by an uncrewed aerial vehicle. Refer to the technical specification (technical specification, TS) 23.256, in which a table specifies specific PQI values and specific A2X service types corresponding to the PQI values.

A current standard has stipulated that a base station may configure a dedicated resource pool for an uncrewed aerial vehicle, and the dedicated resource pool may support the uncrewed aerial vehicle in transmitting DAA data and/or BRID data. However, for the uncrewed aerial vehicle, when data arrives, if a non-standard PQI is used or no PQI is used, the uncrewed aerial vehicle cannot distinguish, according to a standard protocol, a specific service for which the arrived data is used. Alternatively, when service data arrives at an upper layer, if the upper layer uses a non-standard PQI or does not use a PQI, a lower layer of the uncrewed aerial vehicle cannot distinguish, based on a standard PQI protocol, a specific service for which the arrived service data is used. Consequently, the uncrewed aerial vehicle may not transmit data of a corresponding service type in the resource pool configured by the base station, causing a transmission error.

In view of this, this application provides a communication method. When a terminal device determines that a PQI is not a standard PQI (or when an upper layer of the terminal device determines that a PQI is not a standard PQI), the terminal device may obtain indication information, where the indication information indicates a service type corresponding to data. The terminal device may further send the first indication information to a network device, to indicate the network device to allocate a resource of the service type. Subsequently, the terminal device may send service data of a corresponding service type on a resource configured by the network device, so that the resource configured by the network device can be correctly used, thereby avoiding a transmission error. For example, the terminal device may transmit data of a DAA service on a DAA dedicated resource configured by the network device, the terminal device may transmit data of a BRID service on a BRID dedicated resource configured by the network device, and the terminal device may transmit data of a common service on a common resource configured by the network device.

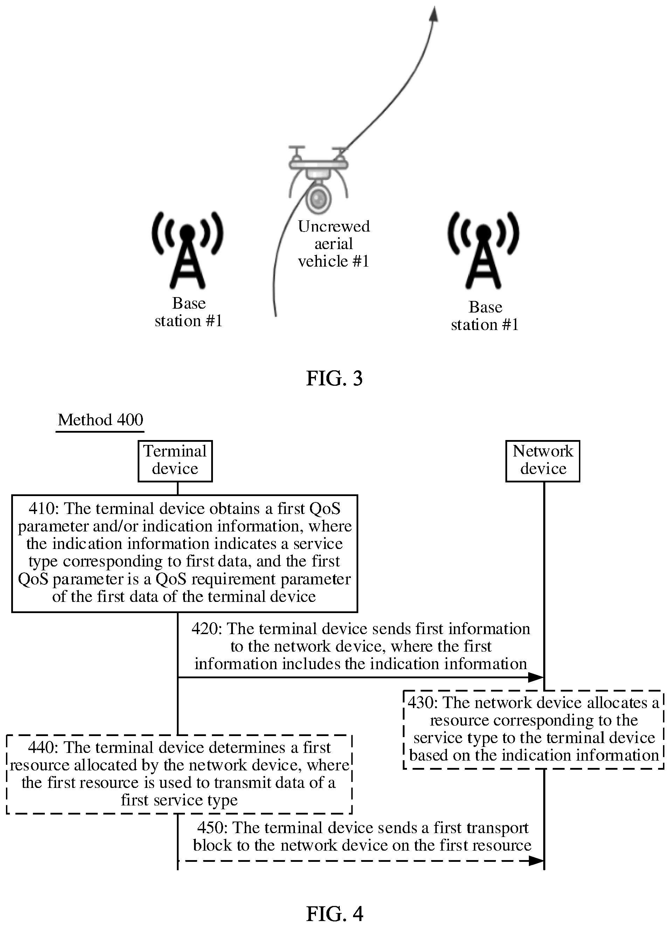

FIG. 3 is a diagram of a scenario to which this application is applicable. As shown in FIG. 3, the application scenario is a scenario in which an uncrewed aerial vehicle determines a service type corresponding to service data and reports the service type to a network device in a flight process.

FIG. 4 is a schematic flowchart of a communication method 400 according to this application. As shown in FIG. 4, the method includes the following steps.

410: A terminal device obtains a first QoS parameter and/or indication information, where the indication information indicates a service type corresponding to first data, and the first QoS parameter is a QoS requirement parameter of the first data of the terminal device.

For example, the first QoS parameter is a QoS parameter not defined by 3GPP.

In this application, the "first data" may be understood as data from an upper layer. In this application, "data" may also be replaced with "service data".

In this application, "the first QoS parameter is a QoS parameter not defined by 3GPP" may also be understood as "the first QoS parameter is a QoS parameter corresponding to a service type not specified in 3GPP specifications".

In a possible implementation scenario, a "parameter not defined by 3GPP" may be understood as a private parameter, not a parameter specified in protocols. For example, assuming that a QoS parameter is a PQI, the protocols define that PQI values ranging from 40 to 44 and 62 to 65 respectively have corresponding service types. The "first QoS parameter" in this application may be understood as that a PQI value is 10 or a PQI value is 100. In this case, the protocol does not specify a service type corresponding to the PQI value of 10 and a service type corresponding to the PQI value of 100.

In another possible implementation scenario, a "parameter not defined by 3GPP" may be understood as that although a parameter defined by 3GPP is used, a corresponding service type is not defined in protocols. For example, assuming that a QoS parameter is a PQI, the protocols define a service type corresponding to a PQI value of 42 as a C2 service, a service type corresponding to a PQI value of 62 as a BRID service, and a service type corresponding to a PQI value of 64 as a DAA service. The "first QoS parameter" in this application may be understood as follows: When a PQI value is 42, the terminal device internally defines a corresponding service type as a DAA service; when a PQI value is 62, the terminal device internally defines a corresponding service type as a C2 service; and when a PQI value is 64, the terminal device internally defines a corresponding service type as a BRID service.

Optionally, the terminal device may determine whether a QoS parameter is the first QoS parameter or a second QoS parameter. The second QoS parameter may be understood as a "QoS parameter defined by 3GPP", or may be understood as a "QoS parameter corresponding to a service type specified in the 3GPP specifications". Specifically, how the terminal device internally determines whether a QoS parameter is a parameter specified in a protocol or not may be internally implemented by the terminal device. This is not limited.

It should be noted that, in this application, a specific name of the QoS parameter is not limited. For example, the QoS parameter may be a PQI or another parameter, and the parameter falls within the protection scope of this application provided that the parameter is a parameter representing a QoS requirement.

In this application, for example, the "service type" includes at least one of a detect and avoid DAA service, a broadcast uncrewed aerial vehicle ID BRID service, and a command and control C2 service. For example, the service type corresponding to the first data may include a DAA service type and a BRID service type.

For example, a value "01" of a bit in the indication information indicates the DAA service, and a value "10" of a bit in the indication information indicates the BRID service. For example, the indication information may indicate different service types by reusing a name of a QoS field in the PQI. For example, a name of a QoS field in the PQI is DAA-QoS, or a name of a QoS field in the PQI is DAA-QoS.

In this application, "the terminal device obtains the first QoS parameter and/or the indication information" may be implemented, for example, in the following manners:

### Manner 1

In another possible implementation, the terminal device obtains the first QoS parameter, an upper layer of the terminal device sends the first QoS parameter to a lower layer, and the lower layer of the terminal device determines that the first QoS parameter is not a QoS parameter defined in a standard. Therefore, the lower layer of the terminal device may determine the indication information based on the first QoS parameter and/or the first data.

### Manner 2

In a possible implementation, the terminal device obtains the first QoS parameter, and the terminal device determines that the first QoS parameter is not a QoS parameter defined in a standard. Therefore, an upper layer of the terminal device may determine the indication information based on the first QoS parameter and/or the first data, and send the indication information to a lower layer.

### Manner 3

In another possible implementation, the terminal device obtains the first QoS parameter, and an upper layer of the terminal device determines that the first QoS parameter is not a QoS parameter defined in a standard. Therefore, the upper layer of the terminal device may determine the indication information based on the first QoS parameter and/or the first data, and send both the first QoS parameter and the indication information to a lower layer.

### Manner 4

In a possible implementation, an upper layer of the terminal device may determine the indication information based on the data, and send the indication information to a lower layer. Alternatively, the lower layer of the terminal device determines the indication information based on the data.

It should be noted that, in Manner 4, at the beginning, the terminal device obtains only the indication information, but does not obtain the first QoS parameter. Subsequently, the terminal device may receive the first QoS parameter from a core network by using a NAS message.

In this application, the "upper layer of the terminal device" may be understood as, for example, an A2X layer, or may be understood as an application layer; and the "lower layer of the terminal device" may be understood as, for example, a physical layer or an access layer.

Optionally, in this application, the terminal device may distinguish between service types corresponding to data by using the obtained indication information. Therefore, if the network device has preconfigured resources of different service types for the terminal device, the terminal device may directly transmit data of a corresponding service type on a corresponding resource, thereby avoiding a transmission error.

420: The terminal device sends first information to the network device, where the first information includes the indication information.

Correspondingly, the network device receives the first information.

In this application, the indication information may be used by the network device to allocate a resource corresponding to the service type to the terminal device.

For example, the first information may be sidelink UE information (sidelink UE information, SUI).

In a possible implementation, the indication information may directly indicate a service type at a QoS flow granularity. It may also be understood that the indication information indicates a service type corresponding to each QoS flow. For example, the indication information may uniformly indicate service types corresponding to all QoS flows. For example, the indication information may alternatively indicate a service type corresponding to each QoS flow. A specific implementation is not limited in this application.

In another possible implementation, the first information may further include a layer 2 identifier L2 ID, and the L2 ID indicates the terminal device. In this case, the indication information may indicate a service type of data of the terminal device corresponding to the L2 ID. For example, a terminal device that is a destination (destination) terminal may be determined by using the L2 ID. In this case, the indication information may specifically indicate a service type corresponding to the terminal device. It is assumed that the first information includes L2 ID#1. In a possible implementation, the indication information may indicate that a service type corresponding to L2 ID#1 is a DAA service.

In still another possible implementation, if the L2 ID is associated with a plurality of QoS flows, the indication information may indicate service types respectively corresponding to the plurality of QoS flows. For example, assuming that there are two QoS flows associated with L2 ID#1: a QoS flow #1 and a QoS flow #1#, and the indication information includes a field #1 and a field #2, where the field #1 indicates that a service type is a DAA service, and the field #2 indicates a BRID service, the indication information may indicate that a service type corresponding to the QoS flow #1 is a DAA service, and a service type corresponding to the QoS flow #2 is a BRID service. For example, assuming that there are five QoS flows associated with L2 ID#2, and the indication information includes only a field #1, the field #1 may indicate that service types corresponding to the five QoS flows associated with L2 ID#2 are all BRID service types. In this case, it may also be understood that service types corresponding to a plurality of QoS flows associated with a same L2 ID are the same.

In this application, in a possible implementation, in Manner 1 to Manner, the first information may further include the first QoS parameter. In another possible implementation, the first QoS parameter may not be sent in a same piece of information as the indication information. For example, the first QoS parameter may be sent to the network device through other signaling after the indication information is sent.

It may be understood that the foregoing implementation is mainly for a unicast service. For a broadcast service, the first information directly includes the L2 ID to distinguish a service type.

Optionally, the method further includes step 430: The network device allocates the resource corresponding to the service type to the terminal device based on the indication information.

In this application, in a possible implementation, the network device allocates the corresponding resource to the terminal device based on the indication information reported by the terminal device. For example, if the indication information indicates that service types include a DAA service and a C2 service, the network device may allocate a DAA dedicated resource pool to the DAA service, and allocate a common resource pool to the C2 service.

In another possible implementation, the network device may pre-allocate a resource corresponding to each service type to the terminal device. For example, the network device allocates a DAA dedicated resource pool to a DAA service, or allocates a BRID dedicated resource pool to a BRID service, or allocates a common resource pool to a C2 service.

For example, the network device may indicate, to the terminal device in a manner of sending configuration information, the resource allocated to the terminal device.

The "resource" in this application may be a frequency domain resource, a time domain resource, a resource pool, a resource block (resource block, RB), a physical resource block (physical resource block, PRB), or the like. This is not limited in this application.

Optionally, the method further includes step 440: The terminal device determines a first resource allocated by the network device, where the first resource is used to transmit data of a first service type.

Assuming that the service type corresponding to the first data of the terminal device is a DAA service, and a resource allocated by the network device to the terminal device for transmitting data of the DAA service is the first resource, the terminal device may determine a location of the first resource.

Optionally, the method further includes step 450: The terminal device sends a first transport block to the network device on the first resource.

Correspondingly, the network device receives the first transport block from the terminal device.

In this application, after receiving a sidelink resource scheduled by the network device, the terminal device first determines a destination (destination) to which data is to be sent, then determines to-be-sent logical channel data of the destination, determines and selects a destination with to-be-transmitted data of a highest priority in all destinations, then sorts buffered data and media access control control elements (media access control control element, MAC CE) in logical channels in the destination, and preferentially sends data or a MAC CE of a high priority. This process may also be understood as a process in which the terminal device forms a transport block (transport block, TB).

This application further proposes that service types corresponding to data in a transport block (namely, the first transport block) formed by the terminal device are the same. To be specific, a service type corresponding to data in the first transport block is the first service type, and the data in the first transport block is a part or all of the first data. For example, if the first service type is a DAA service, the data in the first transport block is data of the DAA service type in the first data.

Based on the foregoing technical solution, considering that when a QoS parameter is not a parameter defined in a standard, the terminal device cannot distinguish between service types of data by using a standard protocol, this application proposes that the terminal device may internally determine first indication information, where the indication information indicates a service type corresponding to data. The terminal device may further send the first indication information to the network device, and then the terminal device may send service data of a corresponding service type on a resource configured by the network device, so that the resource configured by the network device can be correctly used, thereby avoiding a transmission error. For example, the terminal device may transmit data of a DAA service on a DAA dedicated resource configured by the network device, the terminal device may transmit data of a BRID service on a BRID dedicated resource configured by the network device, and the terminal device may transmit data of a common service on a common resource configured by the network device.

In addition, in this application, only data of a same service type can be grouped into a same transport block, to ensure that no data of other service types is transmitted on a dedicated resource allocated by the network device to the terminal device, thereby avoiding a transmission error.

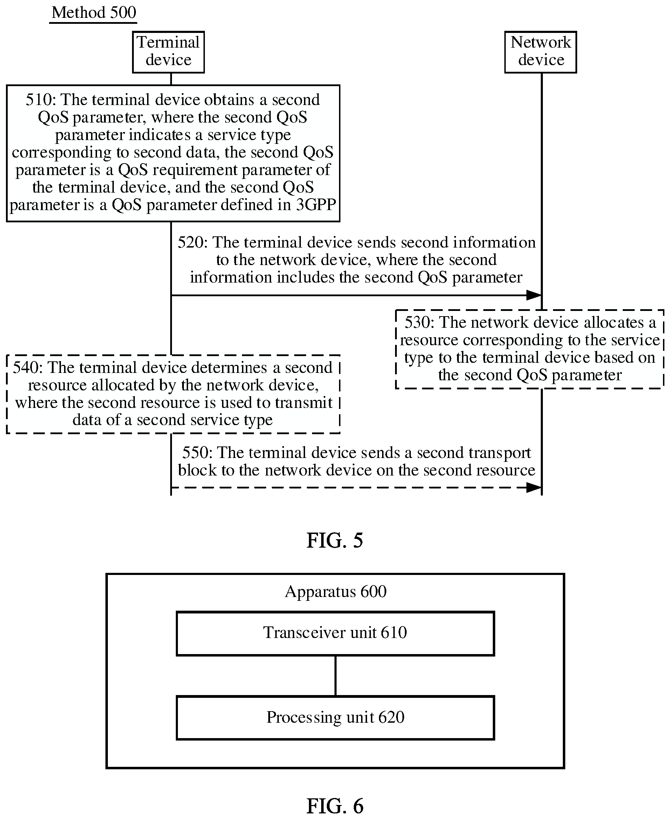

FIG. 5 is a schematic flowchart of a communication method 500 according to this application. An implementation in the method 500 same as that in the method 400 is not described again. The method 500 mainly describes a difference from the method 400. As shown in FIG. 5, the method includes the following steps.

510: A terminal device obtains a second QoS parameter, where the second QoS parameter indicates a service type corresponding to second data, the second QoS parameter is a QoS requirement parameter of the second data of the terminal device, and the second QoS parameter is a QoS parameter defined by 3GPP.

In this application, "the second QoS parameter is a QoS parameter defined by 3GPP" may also be understood as "the second QoS parameter is a QoS parameter corresponding to a service type specified in the 3GPP specifications". For example, for a QoS parameter defined by 3GPP, refer to TS 38.331. Certainly, a QoS parameter newly defined in future 3GPP is also included. For example, different PQI values defined in TS 23.256 may indicate different service types.

For example, the second QoS parameter may be obtained by the terminal device from a core network by using a NAS message.

For example, the "service type" in this application may include at least one of a detect and avoid DAA service, a broadcast uncrewed aerial vehicle ID BRID service, and a command and control C2 service.

In a possible implementation, after obtaining the second QoS parameter, the terminal device may also generate second indication information based on the second QoS parameter and/or the second data, where the second indication information indicates the service type corresponding to the second data.

520: The terminal device sends second information to the network device, where the second information includes the second QoS parameter.

Correspondingly, the network device receives the second information from the terminal device.

For example, the second information may be sidelink UE information (sidelink UE information, SUI).

In this application, the second QoS parameter is used by the network device to allocate a resource corresponding to the service type to the terminal device.

In a possible implementation, the second QoS parameter may directly indicate a service type at a QoS flow granularity. It may also be understood that the second QoS parameter indicates a service type corresponding to each QoS flow. For example, the second QoS parameter may uniformly indicate service types corresponding to all QoS flows. For example, the second QoS parameter may alternatively indicate a service type corresponding to each QoS flow. A specific implementation is not limited in this application.

In another possible implementation, the second information may further include a layer 2 identifier L2 ID, and the L2 ID indicates a type of the terminal device. In this case, the second QoS parameter may indicate a service type of data of the terminal device corresponding to the L2 ID.

In still another possible implementation, if the L2 ID is associated with a plurality of QoS flows, the second QoS parameter may indicate service types corresponding to the plurality of QoS flows.

In another possible implementation, the service types corresponding to the plurality of QoS flows are the same.

For a specific implementation, refer to the related description and example of step 420 in the method 400 for understanding. Details are not described again.

In some implementations, if the second indication information is generated in step 510, the second information may further include the second indication information in step 520.

Optionally, the method further includes step 530: The network device allocates the resource corresponding to the service type to the terminal device based on the second QoS parameter.

In this application, in a possible implementation, the network device allocates the corresponding resource to the terminal device based on the second QoS parameter reported by the terminal device. For example, if the second QoS parameter indicates that service types include a DAA service and a C2 service, the network device may allocate a DAA dedicated resource pool to the DAA service, and allocate a common resource pool to the C2 service.

In another possible implementation, the network device may pre-allocate a resource corresponding to each service type to the terminal device. For example, the network device allocates a DAA dedicated resource to a DAA service, or allocates a BRID dedicated resource to a BRID service, or allocates a common resource to a C2 service.

Optionally, the method further includes step 540: The terminal device determines a second resource allocated by the network device, where the second resource is used to transmit data of a second service type.

Assuming that the service type corresponding to the second data of the terminal device is a DAA service, and a resource allocated by the network device to the terminal device for transmitting data of the DAA service is the second resource, the terminal device may determine a location of the second resource.

Optionally, the method further includes step 550: The terminal device sends a second transport block to the network device on the second resource.

Correspondingly, the network device receives the second transport block from the terminal device.

In this application, after receiving a sidelink resource scheduled by the network device, the terminal device first determines to-be-sent destination (destination) data, then determines to-be-sent logical channel data of the destination, determines and selects a destination with to-be-transmitted data of a highest priority in all destinations, then sorts buffered data and media access control control elements (media access control control element, MAC CE) in logical channels in the destination, and preferentially sends data or a MAC CE of a high priority. This process may also be understood as a process in which the terminal device forms a transport block.

This application further proposes that service types corresponding to data in a transport block (transport block, TB) (namely, the second transport block) formed by the terminal device are the same. To be specific, a service type corresponding to data in the second transport block is the second service type, and the data in the second transport block is a part or all of the second data. For example, if the second service type is a DAA service, the data in the second transport block is data of the DAA service type in the second data.

Based on the foregoing technical solution, in this application, when a QoS parameter is a parameter defined in a standard, the terminal device may distinguish between service types of data by using a standard QoS parameter, and the terminal device may further send the QoS parameter to the network device. Therefore, the terminal device may send service data of a corresponding service type on a resource configured by the network device, so that the resource configured by the network device can be correctly used, thereby avoiding a transmission error. For example, the terminal device may transmit data of a DAA service on a DAA dedicated resource configured by the network device, the terminal device may transmit data of a BRID service on a BRID dedicated resource configured by the network device, and the terminal device may transmit data of a common service on a common resource configured by the network device.

In addition, in this application, only data of a same service type can be grouped into a same transport block, to ensure that no data of other service types is transmitted on a dedicated resource allocated by the network device to the terminal device, thereby avoiding a waste of a dedicated resource.

It may be understood that the examples in the method 400 and the method 500 in embodiments of this application are merely intended to help a person skilled in the art understand embodiments of this application, but are not intended to limit embodiments of this application to specific scenarios in the examples. It is clear that a person skilled in the art can make various equivalent modifications or variations to the examples in the method 400 and the method 500, and such modifications or variations also fall within the scope of embodiments of this application.

It may be further understood that some optional features in embodiments of this application may be independent of other features in some scenarios, or may be combined with other features in some scenarios. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It may be understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

The foregoing mainly describes the solutions provided in embodiments of this application from the perspective of interaction between all nodes. It may be understood that, to implement the foregoing functions, the nodes such as the terminal device and the network device include corresponding hardware structures and/or software modules for performing the functions. A person skilled in the art may be aware that, in combination with the examples described in embodiments disclosed in this specification, units and algorithm steps may be implemented by using hardware or a combination of hardware and computer software in this application. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the terminal device and the network device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 6 is a block diagram of a communication apparatus 600 according to an embodiment of this application. As shown in the figure, the apparatus 600 may include a transceiver unit 610 and a processing unit 620.

In a possible design, the apparatus 600 may be the terminal device in the foregoing method embodiments, or may be a chip configured to implement a function of the terminal device in the foregoing method embodiments. It should be understood that the apparatus 600 may correspond to the terminal device in the method 400 and the method 500 in embodiments of this application, and the apparatus 600 may perform steps corresponding to the terminal device in the method 400 and the method 500 in embodiments of this application.

In a possible implementation, the transceiver unit is configured to obtain a first quality of service QoS parameter and indication information, where the indication information indicates a service type corresponding to first data, and the first QoS parameter is a QoS requirement parameter of the first data of the terminal device; and the transceiver unit is configured to send first information to a network device, where the first information includes the indication information.

In a possible implementation, the processing unit is configured to determine a first resource allocated by the network device, where the first resource is used to transmit data of a first service type; and the transceiver unit is configured to send a first transport block to the network device on the first resource, where data in the first transport block corresponds to a same service type, the service type corresponding to the data in the first transport block is the first service type, and the data in the first transport block is a part or all of the first data.

In a possible implementation, the transceiver unit is configured to obtain a second quality of service QoS parameter, where the second QoS parameter indicates a service type corresponding to second data, the second QoS parameter is a QoS requirement parameter of the terminal device, and the second QoS parameter is a service QoS parameter defined in 3rd generation partnership project 3GPP; and the transceiver unit is configured to send second information to a network device, where the second information includes the second QoS parameter.

In a possible implementation, the processing unit is configured to determine a second resource allocated by the network device, where the second resource is used to transmit data of a second service type; and the transceiver unit is configured to send a second transport block to the network device on the second resource, where data in the second transport block corresponds to a same service type, the service type corresponding to the data in the second transport block is the second service type, and the data in the second transport block is a part or all of the second data.

In a possible design, the apparatus 600 may be the network device in the foregoing method embodiments, or may be a chip configured to implement a function of the network device in the foregoing method embodiments. It should be understood that the apparatus 600 may correspond to the network device in the method 400 and the method 500 in embodiments of this application, and the apparatus 600 may perform steps corresponding to the network device in the method 400 and the method 500 in embodiments of this application.

In a possible implementation, the transceiver unit is configured to receive first information from a terminal device, where the first information includes indication information, and the indication information indicates a service type corresponding to first data; and the processing unit is configured to allocate a resource corresponding to the service type to the terminal device based on the first indication information.

In a possible implementation, the transceiver unit is configured to receive a first transport block from the terminal device, where data in the first transport block corresponds to a same service type, the service type corresponding to the data in the first transport block is a first service type, the data in the first transport block is a part or all of the first data, the first transport block is located on a first resource, and the first resource is used to transmit data of the first service type.

In a possible implementation, the transceiver unit is configured to receive second information from a terminal device, where the second information includes a second quality of service QoS parameter, the second QoS parameter indicates a service type corresponding to second data, the second QoS parameter is a QoS requirement parameter of the second data of the terminal device, and the second QoS parameter is a service QoS parameter defined in 3rd generation partnership project 3GPP; and the processing unit is configured to allocate a resource corresponding to the service type to the terminal device based on the second QoS parameter.

In a possible implementation, the transceiver unit is configured to receive a second transport block from the terminal device, where data in the second transport block corresponds to a same service type, the service type corresponding to the data in the second transport block is a second service type, the data in the second transport block is a part or all of the second data, the second transport block is located on a second resource, and the second resource is used to transmit data of the second service type.

It should be further understood that the apparatus 600 herein is embodied in a form of a functional unit. A term "unit" herein may mean an application-specific integrated circuit (application-specific integrated circuit, ASIC), an electronic circuit, a processor (for example, a shared processor, a special-purpose processor, or a group processor) configured to execute one or more software or firmware programs, a memory, a merged logic circuit, and/or another appropriate component that supports the described functions. In an optional example, a person skilled in the art may understand that the apparatus 600 may be specifically the first node or the second node in the foregoing embodiments, and may be configured to perform procedures and/or steps corresponding to the first node or the second node in the foregoing method embodiments. To avoid repetition, details are not described herein again.

The apparatus 600 in each of the foregoing solutions has functions of implementing corresponding steps performed by the terminal device or the network device in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to perform receiving and sending operations and a related processing operation in the method embodiments.

In addition, the transceiver unit 610 may alternatively be a transceiver circuit (for example, may include a receiving circuit and a sending circuit), and the processing unit may be a processing circuit.

It should be noted that the apparatus in FIG. 6 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein. This is not limited herein.

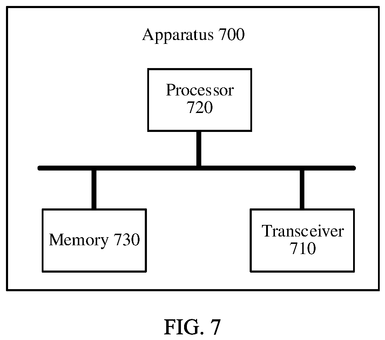

FIG. 7 is a block diagram of a communication apparatus 700 according to an embodiment of this application. As shown in the figure, the apparatus 700 includes at least one processor 720. The processor 720 is coupled to a memory, and is configured to execute instructions stored in the memory, to send a signal and/or receive a signal. Optionally, the device 700 further includes a memory 730, configured to store instructions. Optionally, the device 700 further includes a transceiver 710, and the processor 720 controls the transceiver 710 to send a signal and/or receive a signal.

It should be understood that the processor 720 and the memory 730 may be integrated into one processing device. The processor 720 is configured to execute program code stored in the memory 730, to implement the foregoing functions. During specific implementation, the memory 730 may alternatively be integrated into the processor 720, or may be independent of the processor 720.

It should be further understood that the transceiver 710 may include a transceiver (or referred to as a receiver machine) and a transmitter (or referred to as a transmitter machine). The transceiver may further include an antenna. There may be one or more antennas. The transceiver 710 may alternatively be a communication interface or an interface circuit.

Specifically, the transceiver 710 in the apparatus 700 may correspond to the transceiver unit 610 in the apparatus 600, and the processor 620 in the apparatus 600 may correspond to the processing unit 620 in the apparatus 600.

In a solution, the apparatus 700 is configured to implement operations performed by the terminal device in the foregoing method embodiments.

For example, the processor 720 is configured to execute the computer program or the instructions stored in the memory 730, to implement related operations of the terminal device in the foregoing method embodiments, for example, the method performed by the terminal device in any one of the embodiments shown in the method 400 and the method 500.

In another solution, the apparatus 700 is configured to implement operations performed by the network device in the foregoing method embodiments. For example, the processor 720 is configured to execute the computer program or the instructions stored in the memory 730, to implement related operations of the network device in the foregoing method embodiments, for example, the method performed by the network device in any one of the embodiments shown in the method 400 and the method 500.

It should be understood that specific processes in which the transceiver and the processor perform the foregoing corresponding steps are described in detail in the foregoing method embodiments. For brevity, details are not described herein again.

In an implementation process, steps of the foregoing methods can be implemented by using a hardware integrated logic circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps of the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

Based on the methods provided in embodiments of this application, this application further provides a computer program product. The computer program product stores computer program code. When the computer program code is run on a computer, the computer is enabled to perform the method performed by the terminal device or the network device in any one of the embodiments in the method 400 and the method 500.

Based on the methods provided in embodiments of this application, this application further provides a computer-readable medium. The computer-readable medium stores program code. When the program code is run on a computer, the computer is enabled to perform the method performed by the first node or the second node in the foregoing embodiment.

Based on the methods provided in embodiments of this application, this application further provides a communication system. The communication system includes a terminal device and a network device. The terminal device is configured to perform the steps corresponding to the terminal device in the method 400 and the method 500, and the network device is configured to perform the steps corresponding to the network device in the method 400 and the method 500.

For interpretations and beneficial effects of the related content in any one of the apparatuses provided above, refer to the corresponding method embodiment provided above. Details are not described herein again.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform a step other than the sending and receiving steps. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments. Details are not described herein again.

In several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It should be understood that "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner.

It should be further understood that ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. For example, a first PDSCH and a second PDSCH may be a same physical channel, or may be different physical channels. In addition, these names do not indicate that the two physical channels have different information amounts, content, priorities, importance degrees, or the like.

It should be further understood that, in this application, "at least one" means one or more, and "a plurality of" means two or more. In addition, "at least one of items (pieces)" or a similar expression thereof means one item (piece) or a plurality of items (pieces), that is, any combination of these items, including a single item (piece) or any combination of plural items (pieces). For example, at least one of a, b, or c indicates a, b, c, a and b, a and c, b and c, or a, b, and c.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to sidelink communication, wherein the method comprises:
obtaining, by a terminal device, a first quality of service QoS parameter and indication information, wherein the indication information indicates a service type corresponding to first data, and the first QoS parameter is a QoS requirement parameter of the first data of the terminal device; and
sending, by the terminal device, first information to a network device, wherein the first information comprises the indication information.

2. The method according to claim 1, wherein the indication information is obtained from an upper layer of the terminal device, or the indication information is obtained by the terminal device based on the first data.

3. The method according to claim 1 or 2, wherein the indication information is used by the network device to configure a resource corresponding to the service type for the terminal device.

4. The method according to any one of claims 1 to 3, wherein the first QoS parameter is a QoS parameter not defined by the 3rd generation partnership project 3GPP.

5. The method according to any one of claims 1 to 4, wherein the first information further comprises the first QoS parameter.

6. The method according to any one of claims 1 to 5, wherein the service type comprises at least one of a detect and avoid DAA service, a broadcast uncrewed aerial vehicle ID BRID service, and a command and control C2 service.

7. The method according to any one of claims 1 to 6, wherein the indication information indicates a service type corresponding to a quality of service QoS flow.

8. The method according to any one of claims 1 to 6, wherein the first information further comprises a layer 2 identifier L2 ID, and the indication information indicates a service type of data of the terminal device corresponding to the L2 ID.

9. The method according to claim 8, wherein the indication information indicates a service type corresponding to a QoS flow associated with the L2 ID.

10. The method according to claim 9, wherein the QoS flow corresponds to a same service type.

11. The method according to any one of claims 1 to 10, wherein the method further comprises:
determining a first resource allocated by the network device, wherein the first resource is used to transmit data of a first service type; and
sending a first transport block to the network device on the first resource, wherein data in the first transport block corresponds to a same service type, the service type corresponding to the data in the first transport block is the first service type, and the data in the first transport block is a part or all of the first data.

12. A communication method, applied to sidelink communication, wherein the method comprises:
receiving, by a network device, first information from a terminal device, wherein the first information comprises indication information, and the indication information indicates a service type corresponding to first data; and
allocating, by the network device, a resource corresponding to the service type to the terminal device based on the first indication information.

13. The method according to claim 12, wherein the first information further comprises a first QoS parameter, the first QoS parameter is a QoS requirement parameter of the first data of the terminal device, and the first QoS parameter is a QoS parameter not defined by the 3rd generation partnership project 3GPP.

14. The method according to claim 12 or 13, wherein the indication information is provided by an upper layer of the terminal device, or the indication information is obtained by the terminal device based on the first data.

15. The method according to any one of claims 12 to 14, wherein the service type comprises at least one of a detect and avoid DAA service, a broadcast uncrewed aerial vehicle ID BRID service, and a command and control C2 service.

16. The method according to any one of claims 12 to 15, wherein the indication information indicates a service type corresponding to a quality of service QoS flow.

17. The method according to any one of claims 12 to 15, wherein the first information further comprises a layer 2 identifier L2 ID, and the indication information indicates a service type of data of the terminal device corresponding to the L2 ID.

18. The method according to claim 17, wherein the indication information indicates a service type corresponding to a QoS flow associated with the L2 ID.

19. The method according to claim 18, wherein the QoS flow corresponds to a same service type.

20. The method according to any one of claims 12 to 19, wherein the method further comprises:
receiving, by the network device, a first transport block from the terminal device, wherein data in the first transport block corresponds to a same service type, the service type corresponding to the data in the first transport block is the first service type, the data in the first transport block is a part or all of the first data, the first transport block is located on a first resource, and the first resource is used to transmit data of the first service type.

21. A communication apparatus, configured to implement the method according to any one of claims 1 to 11 or the method according to any one of claims 12 to 20.

22. A communication apparatus, wherein the communication apparatus comprises a processor and a memory, the memory is configured to store a computer program or instructions, and the processor is configured to execute the computer program or the instructions in the memory, to enable the method according to any one of claims 1 to 11 or the method according to any one of claims 12 to 20 to be performed.

23. A computer-readable storage medium, wherein the computer-readable storage medium stores a computer program, and when the computer program is run on a computer, the computer is enabled to perform the method according to any one of claims 1 to 11 or the method according to any one of claims 12 to 20.

24. A computer program product, wherein the computer program product comprises instructions for performing the method according to any one of claims 1 to 11 or the method according to any one of claims 12 to 20.
